# EUROPÄISCHE PATENTSCHRIFT

(11) **EP 3 851 596 B1**
(45) Veröffentlichungstag und Bekanntmachung des Hinweises auf die Patenterteilung: **22.02.2023**
(21) Anmeldenummer: 21151417.9
(22) Anmeldetag: 13.01.2021
(51) Int. Cl.: E03D 9/16

(54) **TOILETTENSPÜLSYSTEM MIT EINER FUNKTION ZUM EINSTELLEN DER SPÜLGESCHWINDIGKEIT**
TOILET FLUSHING SYSTEM WITH FLUSHING RATE SETTING FUNCTION
SYSTÈME DE RINÇAGE DES TOILETTES DOTÉ D'UNE FONCTION DE RÉGLAGE DE LA VITESSE DE RINÇAGE

(30) Priorität: 14.01.2020 CN 202010036570
(43) Veröffentlichungstag der Anmeldung: 21.07.2021
(73) Patentinhaber: Oceanwell (Xiamen) Industrial Co., Ltd., Xiamen, Fujian 361000 (CN)
(72) Erfinder: PENG, Dong, Dongfu Town Haicang Dist., Xiamen (CN); YU, Xingyi, Dongfu Town Haicang Dist., Xiamen (CN); WANG, Canguo, Haicang Dist., Xiamen (CN)
(74) Vertreter: Rätsch, Caroline

(56) Entgegenhaltungen:
- EP-A1- 0 663 480
- EP-A1- 3 064 663
- EP-A1- 3 276 095

## Beschreibung

### Technisches Gebiet

Die vorliegende Erfindung betrifft ein Toilettenspülsystem und insbesondere ein Toilettenspülsystem mit einer Funktion zum Einstellen der Spülgeschwindigkeit.

### Stand der Technik

Bei Spülsystemen für Toiletten besteht eine vergleichsweise einfache Konstruktion darin, dass der Wassertank über eine Leitung mit der Toilettenschüssel verbunden ist, wobei beim Spülen die Öffnung des Wassertanks geöffnet wird und das Wasser durch die Leitung in Richtung der Toilettenschüssel läuft. Auch bekannt ist ein Druck-Wassertank, der mit der Toilettenschüssel über eine Leitung verbunden ist und eine geschlossene Struktur aufweist, wobei die beim Einlassen von Wasser in den Wassertank verdichtete Innenluft eine potentielle Luftenergie erhält, die nach dem Öffnen der Öffnung des Wassertanks beim Spülen freigesetzt wird, und wobei der Wasserfluss zum Spülen der Toilettenschüssel mit hoher Geschwindigkeit und hohem Druck erfolgt, wodurch eine höhere Spülwirkung erreicht werden kann.

Es ist bei bestehenden Spülsystemen eine Tendenz festzustellen, die Spülkraft zu erhöhen, indem der Wassertank größer und höher gemacht wird oder sogar mit einer Druckvorrichtung oder dgl. ausgestattet wird, obwohl heutige Spülsysteme bereits eine gute Spülkraft aufweisen. Andererseits kann es vorkommen, dass das Abwasser aufgrund einer zu hohen Spülgeschwindigkeit direkt aus der Toilettenschüssel gespült wird, dass also beim Spülen das Abwasser in der Toilettenschüssel aufgrund der zu schnellen Strömungsgeschwindigkeit des Wassers direkt aus der Toilette spritzt, den Boden verschmutzt und sogar auf den Benutzer spritzt. Bei einer Konfrontation mit diesem Problem liegt eine Lösung darin, zur ursprünglichen Struktur zurückzukehren, den Behälter zu verkleinern und dessen Höhe zu reduzieren oder die Leistung der Druckvorrichtung zu verringern. Die bekannten Wasserspülsysteme sind also nicht gut an vielfältige Anforderungen der Benutzer angepasst.

Aus der EP 3 064 663 A1 ist ein gattungsgemäßes Spülsystem bekannt, bei dem die Spülgeschwindigkeit über eine Prallplatte eingestellt werden kann. Die Prallplatte sitzt in einem Leitungsstück und ist über einen Betätigungsabschnitt drehbar.

Aus der EP 3 276 095 A1 kann die Spülgeschwindigkeit über ein Ablaufventil eingestellt werden. Das Ablaufventil ist in einem Wasserspeicherbehälter angeordnet und schwer zugänglich.

### Offenbarung der Erfindung

Die vorliegende Erfindung stellt ein Toilettenspülsystem mit einer Funktion zum Einstellen der Spülgeschwindigkeit zur Verfügung, wobei die Spülgeschwindigkeit an aktuelle Gegebenheiten schnell angepasst werden kann.

Das erfindungsgemäße Toilettenspülsystem mit einer Funktion zum Einstellen der Spülgeschwindigkeit weist einen Wasserspeicherbehälter, eine Spülleitung, die einen Wasserauslass des Wasserspeicherbehälters mit einer Toilettenschüssel verbindet, sowie eine Prallplatte auf, wobei an einer Seitenwand der Spülleitung eine Geschwindigkeitsregelöffnung ausgebildet ist, wobei die Prallplatte in die Spülleitung durch die Geschwindigkeitsregelöffnung eingesetzt ist, wobei ein Ende der Prallplatte einen Stopfen aufweist, der drehbar in der Geschwindigkeitsregelöffnung sitzt und sie abdichtet, und wobei ein Drehen des Stopfens ein Drehen der Prallplatte bewirkt.

Die vorliegende technische Lösung weist die folgenden Vorteile auf:
An der Seitenwand der Spülleitung ist eine Geschwindigkeitsregelöffnung ausgebildet, so dass die Prallplatte in die Spülleitung hineinragen kann, wobei auf diese Weise durch eine Drehung der Prallplatte der Wasserdurchlassquerschnitt der Spülleitung an der Stelle der Prallplatte eingestellt werden kann, wobei der Wasserdurchlassquerschnitt maximal ist, wenn die Richtung des Wasserflusses mit der Prallplatte übereinstimmt, und wobei der Wasserdurchlassquerschnitt minimal ist, wenn die Richtung des Wasserflusses senkrecht zur Prallplatte ist. Somit ermöglicht das erfindungsgemäße Spülsystem ein schnelles Einstellen des Wasserdurchlassquerschnitts der Spülleitung durch eine Drehung der Prallplatte, wodurch die Wasserflussgeschwindigkeit in der Spülleitung gesteuert und durch eine zu hohe Spülgeschwindigkeit verursachtes Spritzen von Abwasser vermieden wird. Ein weiterer Vorteil besteht darin, dass die Auslassgeschwindigkeit schnell eingestellt werden kann.

Im Folgenden wird die Erfindung anhand eines Ausführungsbeispiels im Zusammenhang mit der Zeichnung näher erläutert.
Figur 1 zeigt eine schematische perspektivische Ansicht eines Toilettenspülsystems mit einer Funktion zum Einstellen der Spülgeschwindigkeit gemäß der vorliegenden Erfindung.
Figur 2 zeigt eine schematische Ansicht eines Gehäuseelements des Toilettenspülsystems aus Figur 1 mit einem offenen Fenster.
Figur 3 zeigt eine Explosionsdarstellung der Prallplatte, der Verbindungsstange und des Drehknopfes des Toilettenspülsystems nach Figur 1.

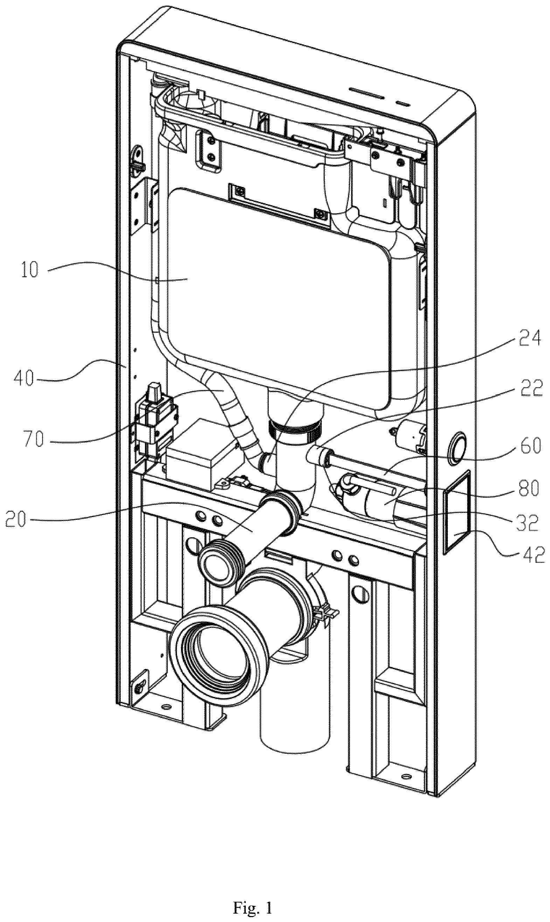

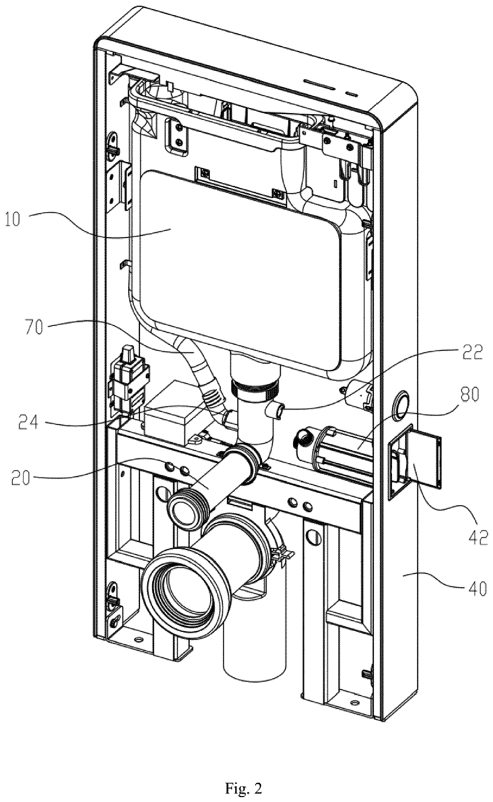

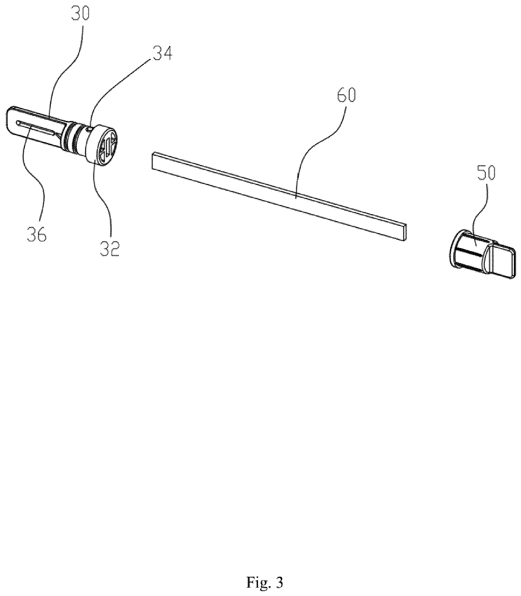

Mit Bezug auf die Figuren 1 bis 3 umfasst ein Toilettenspülsystem mit einer Funktion zum Einstellen der Spülgeschwindigkeit einen Wasserspeicherbehälter 10 und eine Spülleitung 20, die einen Wasserauslass des Wasserspeicherbehälters 10 mit einer Toilettenschüssel verbindet, wobei der Wasserspeicherbehälter 10 ein normaler Wassertank oder ein Druck-Wassertank sein kann, und wobei durch ein Öffnen des Wasserauslasses des Wasserspeicherbehälters 10 Wasser durch die Spülleitung 20 in die Toilettenschüssel strömt, was eine Spülung der Toilettenschüssel ermöglicht.

An einer Seitenwand der Spülleitung 20 ist eine Geschwindigkeitsregelöffnung 22 ausgebildet. Ferner ist eine Prallplatte 30 vorgesehen, die in die Spülleitung 20 durch die Geschwindigkeitsregelöffnung 22 eingesetzt ist, wobei ein Ende der Prallplatte 30 einen Stopfen 32 aufweist, der drehbar in der Geschwindigkeitsregelöffnung 22 sitzt und die Geschwindigkeitsregelöffnung 22 abdichtet, und wobei ein Drehen des Stopfens 32 eine Drehung der Prallplatte 30 bewirkt.

Ein maximaler Wasserdurchlassquerschnitt der Spülleitung 20 wird von der Prallplatte 30 blockiert, wenn die Prallplatte 30 senkrecht zur Mittelachse der Spülleitung 20 angeordnet ist. Dann ist der Querschnitt, durch den das Wasser fließt, klein, und die Spülgeschwindigkeit ist niedrig. Ein minimaler Wasserdurchlassquerschnitt in der Spülleitung 20 wird hingegen von der Prallplatte 30 blockiert, wenn die Prallplatte 30 parallel zur Mittelachse der Spülleitung 20 angeordnet ist. Dann ist der Querschnitt, durch den das Wasser fließt, groß, und die Spülgeschwindigkeit ist schnell.

Da die Spülleitung 20 direkt mit der Toilettenschüssel und ihr Innenraum direkt mit der Toilettenschüssel verbunden ist, wird der Fachmann für eine Reduzierung der Strömungsgeschwindigkeit instinktiv Veränderungen an der Spülleitung 20 vermeiden und stattdessen eher den Wasserspeicherbehälter 10 klein und kurz oder den Wasserauslass des Wasserspeicherbehälters 10 klein ausbilden. Diese Modifikation ist jedoch irreversibel und kostet den Verlust einer starken Spülkraft. Bei der vorliegenden Erfindung wird im Gegensatz zu herkömmlichen Lösungen die Geschwindigkeitsregelöffnung 22 an der Spülleitung 20 zur Unterbringung der Prallplatte 30 vorgesehen, wobei die Geschwindigkeitsregelöffnung 22 gleichzeitig durch den Stopfen 32 abgedichtet ist. Hierdurch kann der Stopfen 32 leicht außerhalb der Spülleitung 20 gedreht werden, um die Prallplatte 30 in Drehung zu versetzen, wodurch der Wasserdurchlassquerschnitt der Spülleitung 20 eingestellt und die Geschwindigkeit des Spülwassers gesteuert wird. Die Regelung kann wiederholt durchgeführt und damit die Strömungsgeschwindigkeit eingestellt und gleichzeitig die starke Spülkraft beibehalten werden.

Erfindungsgemäß ist ein Gehäuseelement 40 vorgesehen, wobei der Wasserspeicherbehälter 10 im Inneren des Gehäuseelements 40 angebracht ist. Das erfindungsgemäße Spülsystem bildet dann den Gehäuseelement-Wassertank. Erfindungsgemäß sind ferner ein Drehknopf 50 und eine Verbindungsstange 60 vorgesehen, wobei die Verbindungsstange 60 den Drehknopf 50 mit dem Stopfen 32 verbindet, und wobei der Drehknopf 50 drehbar an dem Gehäuseelement 40 angeordnet ist. Durch die Drehung des Drehknopfs 50 werden also die Verbindungsstange 60, der Stopfen 32 und die Prallplatte 30 zusammen gedreht, so dass eine Betätigung von außen realisiert werden kann, wodurch die Einstellung erleichtert wird. Bei dem vorliegenden Ausführungsbeispiel ist vorzugsweise vorgesehen, dass an der Stirnseite des Stopfens 32 und der Stirnseite des Drehknopfs 50 jeweils eine Aufnahme vorgesehen ist, wobei die Enden der Verbindungsstange 60 jeweils in einer Aufnahme eingesetzt sind.

Vorzugsweise ist auf einer Seite des Gehäuseelements 40 ein Fenster 42 angeordnet, das geöffnet werden kann, wobei der Drehknopf 50 hinter dem Fenster 42 angeordnet ist. Durch Öffnen des Fensters 42 kann eine sehr einfache Einstellbedienung erfolgen, wobei das Aussehen schlicht ist.

Eine vorteilhafte Ausführungsform ist dadurch gekennzeichnet, dass sich das andere Ende der Prallplatte 30 drehbar an einer Innenwand der Spülleitung 20 abstützt. Hierdurch ist die Struktur der Prallplatte 30 stabiler.

Vorteilhafterweise ist an einer Umfangswand des Stopfens 32 ein flexibler Vorsprung 34 angeordnet, wobei an einer Innenwand der Geschwindigkeitsregelöffnung 22 mehrere Gang-Rastnuten in Umfangsrichtung beabstandet vorgesehen sind, in die der flexible Vorsprung 34 einrastbar ist. Wenn der flexible Vorsprung 34 in unterschiedliche Gang-Rastnuten gedreht wird, öffnet sich die Prallplatte 30 mit verschiedenen Winkeln. Hierdurch kann ein maximaler und ein minimaler Wasserdurchlassquerschnitt bequem eingestellt werden. Vorzugsweise ist in der Mitte der Prallplatte 30 eine Wasserdurchlassöffnung 36 ausgebildet. Hierdurch kann der Wasserdruck verringert werden, dem die Prallplatte 30 ausgesetzt ist, was auch zu einer leichteren Einstellung beiträgt. Zusätzlich ist auf den Stopfen 32 ein Dichtring angeordnet, um die Geschwindigkeitsregelöffnung 22 gegen Austreten von Wasser abzudichten.

Vorzugsweise ist vorgesehen, dass die Spülleitung 20 L-förmig ausgebildet ist und einen vertikalen Abschnitt, der mit dem Wasserspeicherbehälter 10 verbunden ist, und einen querverlaufenden Abschnitt aufweist, der mit der Toilettenschüssel verbunden ist, wobei die Geschwindigkeitsregelöffnung 22 an dem vertikalen Abschnitt vorgesehen ist. Der vertikale Abschnitt ist höher angeordnet, so dass sich in dem vertikalen Abschnitt kein Wasser ansammelt, wenn das Wasser nicht gespült wird. Dadurch wird eine leichte Einstellung realisiert.

## Patentansprüche

1. Toilettenspülsystem mit einer Funktion zum Einstellen der Spülgeschwindigkeit, aufweisend einen Wasserspeicherbehälter (10) und eine Spülleitung (20), die einen Wasserauslass des Wasserspeicherbehälters (10) mit einer Toilettenschüssel verbindet,
- wobei an einer Seitenwand der Spülleitung eine Geschwindigkeitsregelöffnung (22) ausgebildet ist,
- wobei eine Prallplatte (30) vorgesehen ist, die in die Spülleitung (20) durch die Geschwindigkeitsregelöffnung (22) eingesetzt ist,
- wobei ein Ende der Prallplatte (30) einen Stopfen (32) aufweist, der drehbar in der Geschwindigkeitsregelöffnung (22) sitzt und die Geschwindigkeitsregelöffnung (22) abdichtet, und
- wobei ein Drehen des Stopfens (32) eine Drehung der Prallplatte (30) bewirkt
**dadurch gekennzeichnet,**
- **dass** der Wasserspeicherbehälter im Inneren eines Gehäuseelements (40) angebracht ist, und
- **dass** an dem Gehäuseelement (40) ein Drehknopf (50) drehbar angeordnet ist, der mit dem Stopfen (32) durch eine Verbindungsstange (60) verbunden ist.

2. Toilettenspülsystem nach Anspruch 1, **dadurch gekennzeichnet, dass** an der Stirnseite des Stopfens (32) und der Stirnseite des Drehknopfs (50) jeweils eine Aufnahme vorgesehen ist, wobei die Enden der Verbindungsstange (60) in jeweils einer Aufnahme eingesetzt sind.

3. Toilettenspülsystem nach Anspruch 1, **dadurch gekennzeichnet, dass** auf einer Seite des Gehäuseelements (40) ein Fenster (42) ausgebildet ist, das geöffnet werden kann, wobei der Drehknopf (50) hinter dem Fenster (42) angeordnet ist.

4. Toilettenspülsystem nach Anspruch 1, **dadurch gekennzeichnet, dass** sich das andere Ende der Prallplatte (30) drehbar an einer Innenwand der Spülleitung (20) abstützt, wobei vorzugsweise vorgesehen ist, dass auf dem Stopfen (32) ein Dichtring angeordnet ist und/oder dass in der Mitte der Prallplatte (30) eine Wasserdurchlassöffnung (36) ausgebildet ist.

5. Toilettenspülsystem nach Anspruch 1 oder 4, **dadurch gekennzeichnet, dass** an einer Umfangswand des Stopfens (32) ein flexibler Vorsprung (34) angeordnet ist, und dass an einer Innenwand der Geschwindigkeitsregelöffnung (22) mehrere Gang-Rastnuten in Umfangsrichtung mit Abstand vorgesehen sind, in die der flexible Vorsprung (34) einrastbar ist.

6. Toilettenspülsystem nach Anspruch 1, **dadurch gekennzeichnet, dass** die Spülleitung (20) L-förmig ausgebildet ist, und einen vertikalen Abschnitt, der mit dem Wasserspeicherbehälter (10) verbunden ist, und einen querverlaufenden Abschnitt aufweist, der mit der Toilettenschüssel verbunden ist, wobei die Geschwindigkeitsregelöffnung (22) an dem vertikalen Abschnitt vorgesehen ist.

## Claims

1. Toilet-flushing system with a function for setting the flushing speed, having a water-storage tank (10) and a flushing line (20) which connects a water outlet of the water-storage tank (10) to a toilet bowl,
- wherein a speed-regulation opening (22) is formed at a side wall of the flushing line,
- wherein provision is made of an impingement plate (30) which is inserted into the flushing line (20) through the speed-regulation opening (22),
- wherein one end of the impingement plate (30) has a plug (32) which is seated rotatably in the speed-regulation opening (22) and which seals off the speed-regulation opening (22), and
- wherein a rotation of the plug (32) causes a rotation of the impingement plate (30),
**characterized**
- **in that** the water-storage tank is mounted in the interior of a housing element (40), and
- **in that** a rotary knob (50) is arranged rotatably on the housing element (40) and is connected to the plug (32) by a connecting rod (60).

2. Toilet-flushing system according to Claim 1, **characterized in that** provision is made on the face side of the plug (32) and on the face side of the rotary knob (50) of in each case one receptacle, wherein the ends of the connecting rod (60) are inserted into in each case one receptacle.

3. Toilet-flushing system according to Claim 1, **characterized in that** a window (42) which can be opened is formed at one side of the housing element (40), wherein the rotary knob (50) is arranged behind the window (42).

4. Toilet-flushing system according to Claim 1, **characterized in that** the other end of the impingement plate (30) is supported rotatably against an inner wall of the flushing line (20), wherein it is preferably provided that a sealing ring is arranged on the plug (32) and/or that a water-passage opening (36) is formed in the middle of the impingement plate (30).

5. Toilet-flushing system according to Claim 1 or 4, **characterized in that** a flexible projection (34) is arranged on a circumferential wall of the plug (32), and **in that** multiple latching gear grooves into which the flexible projection (34) can be latched are provided spaced in a circumferential direction on an inner wall at the speed-regulation opening (22) .

6. Toilet-flushing system according to Claim 1, **characterized in that** the flushing line (20) is of L-shaped form and has a vertical portion, which is connected to the water-storage tank (10), and a transversely extending portion, which is connected to the toilet bowl, wherein the speed-regulation opening (22) is provided at the vertical portion.

## Revendications

1. Système de rinçage de toilettes ayant une fonction d'ajustement de la vitesse de rinçage, comprenant un réservoir d'eau (10) et une conduite de rinçage (20), qui relie une sortie d'eau du réservoir d'eau (10) à une cuvette de toilettes,
- une ouverture de réglage de la vitesse (22) étant réalisée sur une paroi latérale de la conduite de rinçage,
- une plaque déflectrice (30) étant prévue, qui est insérée dans la conduite de rinçage (20) à travers l'ouverture de réglage de la vitesse (22),
- une extrémité de la plaque déflectrice (30) présentant un bouchon (32), qui est placé de manière rotative dans l'ouverture de réglage de la vitesse (22) et étanchéifie l'ouverture de réglage de la vitesse (22), et
- une rotation du bouchon (32) provoquant une rotation de la plaque déflectrice (30),
**caractérisé en ce que**
- le réservoir d'eau est disposé à l'intérieur d'un élément de boîtier (40), et
- un bouton rotatif (50) est agencé de manière rotative sur l'élément de boîtier (40), lequel est relié au bouchon (32) par une tige de liaison (60).

2. Système de rinçage de toilettes selon la revendication 1, **caractérisé en ce qu'**un logement est prévu respectivement sur le côté frontal du bouchon (32) et sur le côté frontal du bouton rotatif (50), les extrémités de la tige de liaison (60) étant insérées dans un logement respectif.

3. Système de rinçage de toilettes selon la revendication 1, **caractérisé en ce qu'**une fenêtre (42) qui peut être ouverte est réalisée sur un côté de l'élément de boîtier (40), le bouton rotatif (50) étant agencé derrière la fenêtre (42).

4. Système de rinçage de toilettes selon la revendication 1, **caractérisé en ce que** l'autre extrémité de la plaque déflectrice (30) s'appuie de manière rotative sur une paroi intérieur de la conduite de rinçage (20), il étant de préférence prévu qu'une bague d'étanchéité est agencée sur le bouchon (32) et/ou qu'une ouverture de passage d'eau (36) est réalisée au centre de la plaque déflectrice (30).

5. Système de rinçage de toilettes selon la revendication 1 ou 4, **caractérisé en ce qu'**une saillie flexible (34) est agencée sur une paroi périphérique du bouchon (32), et **en ce que** plusieurs rainures d'encliquetage de passage sont prévues sur une paroi intérieure de l'ouverture de réglage de la vitesse (22), espacées dans la direction périphérique, dans lesquelles la saillie flexible (34) peut être encliquetée.

6. Système de rinçage de toilettes selon la revendication 1, **caractérisé en ce que** la conduite de rinçage (20) est réalisée en forme de L, et présente une section verticale, qui est reliée au réservoir d'eau (10), et une section s'étendant transversalement, qui est reliée à la cuvette de toilettes, l'ouverture de réglage de la vitesse (22) étant prévue sur la section verticale.
